# EUROPÄISCHE PATENTSCHRIFT

(11) **EP 3 822 062 B1**
(45) Veröffentlichungstag und Bekanntmachung des Hinweises auf die Patenterteilung: **20.10.2021**
(21) Anmeldenummer: 19208625.4
(22) Anmeldetag: 12.11.2019
(51) Int. Cl.: B29C 49/48, B60K 15/03

(54) **KUNSTSTOFFTANK UND VERFAHREN ZUR HERSTELLUNG EINES KUNSTSTOFFTANKS**
FUEL TANK AND METHOD FOR MANUFACTURING A FUEL TANK
RÉSERVOIR EN MATIÈRE PLASTIQUE ET PROCÉDÉ DE FABRICATION D'UN RÉSERVOIR EN MATIÈRE PLASTIQUE

(43) Veröffentlichungstag der Anmeldung: 19.05.2021
(73) Patentinhaber: Magna Energy Storage Systems GesmbH, 8261 Sinabelkirchen (AT)
(72) Erfinder: URDL, Christian, 8113 Hitzendorf (AT); ERHART, Martin, 8020 Graz (AT); WIMMER, Florian, 8334 Riegersburg (AT); PUCHLEITNER, Rainer, 8052 Graz (AT)
(74) Vertreter: Zangger, Bernd

(56) Entgegenhaltungen:
- EP-A2- 0 353 877
- EP-A2- 2 535 166
- WO-A1-94/12334
- DE-A1- 4 221 766
- DE-A1-102008 024 024
- DE-B3-102007 026 817
- US-A- 3 940 002

## Beschreibung

### Gebiet der Erfindung

Die vorliegende Erfindung betrifft einen Kunststofftank und ein Verfahren zur Herstellung eines Kunststofftanks, insbesondere für ein Kraftfahrzeug.

### Stand der Technik

Es ist bekannt, dass Kunststofftanks, die in jüngerer Zeit beispielsweise als Kraftstofftanks von Kraftfahrzeugen wie Personenkraftwagen und Lastkraftwagen verbaut werden, zusätzlich zu einer Reihe positiver Eigenschaften problematisch sind in Bezug auf mögliche Verformungen des Kraftstofftanks. Bei üblichem Betrieb von Tanksystemen in Kraftfahrzeugen kann es in bestimmten Zonen des Tanksystems zu hohen Verformungen kommen. Vor allem Satteltanksysteme, die Eindellungen aufweisen können und deren Geometrie eine starke Abhängigkeit von Fahrzeugteilen wie Kardanwelle und Abgasanlage haben, müssen im Tunnelbereich hohe Steifigkeit aufweisen. Verkettungen von Druck und Temperaturspitzen in Zonen des Tankes können, vor allem bei Kunststofftanks, hohe Relativbewegungen der Tankschalen bedingen und müssen durch konstruktive Maßnahmen beschränkt werden.

Stützkonzepte zur Verringerung der unerwünschten Verformungen der Kraftstofftanks, die aus dem Stand der Technik bekannt sind, verwenden zumeist karosseriefeste Anlagepunkte um Verformungen der Tankwände zu begrenzen. Insbesondere für unter Druck befindliche Tanksysteme reichen diese Maßnahmen jedoch nicht aus und es müssen zusätzliche Maßnahmen verwendet werden, um Verformungen zu vermindern. Oftmals wird die Schalendicke der Tankblase erhöht oder es werden versteifende angeschweißte Bauteile verwendet, um die Verformung zu begrenzen. Solche Maßnahmen ziehen signifikante Einbußen für das Tankvolumen nach sich und beschränken somit die Funktion des Systems. Für versteifende Bauteile die an einer Tankwand angebracht werden, besteht auch das Problem, dass sich die versteifenden Bauteile während der Benutzung des Kunststofftanks durch die auftretenden Belastungen zumindest abschnittsweise lösen können.

Aus der US 3 940 002 A ist ein Kunststoffbehälter bekannt, der eine Außenwand umfassen kann, die aus einem oberflächenstabilisierten Material mit geringem Verzug und einer ausreichend hohen Diffusionsdichte und einem ausreichend geringen Oberflächenwiderstandseffekt besteht, wobei dieses Material in Form von Schalen bereitgestellt wird, die einen Teil der Form des Behälters bilden und eine zusammenhängende, blasgeformte Kunststoffwand, die auf und um die Innenflächen der Schalen dicht befestigt ist.

Die WO 94/12334 A1 offenbart ein Verfahren zum Formen von verstärkten thermoplastischen Objekten, umfassend: Positionierung mindestens einer Schicht von Verstärkungssträngen mit hoher Zugfestigkeit auf mindestens einer Innenfläche einer Form; Einführung eines thermoplastischen Polymer-Materials in einem erhitzten plastischen Zustand in die Form; Formen des Polymermaterials in der Form zu einem geformten Gegenstand und gleichzeitig damit das besagte Material dazu bringen, die Verstärkungsstränge zu umhüllen, so dass die Stränge und das Polymermaterial mechanisch miteinander verbunden werden; und Öffnen der Form und Entnehmen des Objekts dass so geformt wurde.

Aus der DE 42 21 766 A1 ist ein Kunststoff-Kraftstoffbehälter für die Brennkraftmaschine eines Kraftfahrzeugs bekannt, wobei im Betrieb der Maschine formänderungsgefährdete Wände des Behälters mit zumindest einem formschlüssig gehaltenen Metallprofil versteift sind.

### Zusammenfassung der Erfindung

Es ist eine Aufgabe der Erfindung, einen Kunststofftank anzugeben, wobei unerwünschte Verformungen verringert werden, ohne das Volumen des Kraftstofftanks signifikant zu reduzieren, wobei der Kunststofftank und die Maßnahme zur Verringerung von Verformungen auch bei längerfristigen Belastungen zuverlässig operieren.

Eine weitere Aufgabe ist es ein Herstellungsverfahren für einen solchen längerfristig verwendbaren, verformungsstabilen Kunststofftank anzugeben.

Die Lösung der Aufgabe erfolgt durch einen Kunststofftank gemäß Anspruch 1, umfassend eine Tankwand aus Kunststoff und mindestens ein längliches Versteifungsprofil zur Minimierung einer unerwünschten Verformung des Kunststofftanks, wobei das Versteifungsprofil an einer Außenseite des Kunststofftanks angeordnet ist, wobei das Material der Tankwand zumindest bereichsweise das Versteifungsprofil umgreift, so dass ein formschlüssiger Halt zwischen Tankwand und Versteifungsprofil besteht, wobei zumindest in der Nähe eines axialen Endes des Versteifungsprofils eine Haltegeometrie ausgebildet ist, wobei die Haltegeometrie in einer Draufsicht auf die Tankwand des Kunststofftanks breiter ausgebildet ist, als andere axiale Abschnitte des Versteifungsprofils, wobei die Haltegeometrie Öffnungen aufweist, wobei sich das Material der Tankwand durch die Öffnungen der Haltegeometrie und auf die von der Tankwand abgewandte Hinterseite des Versteifungsprofils erstreckt, so dass ein formschlüssiger Halt zwischen Tankwand und Versteifungsprofil an der Haltegeometrie im Bereich der Öffnungen besteht, wobei die Öffnungen der Haltegeometrie mehrere nebeneinander und/oder untereinander angeordnete Langlöcher umfassen. und ein Verfahren gemäß Anspruch 6.

Erfindungsgemäß wird ein, oder bevorzugt mehrere, Versteifungsprofil verwendet, dass durch einen formschlüssigen Halt an der Tankwand eines Kunststofftanks befestigt wird. Da längliche Versteifungsprofile insbesondere an den axialen Enden dazu neigen, sich nach längerer Belastung von der Tankwand zu lösen, weist ein Versteifungsprofil erfindungsgemäß eine Haltegeometrie im Bereich zumindest eines Endes des Versteifungsprofils auf, das Öffnungen für einen Durchtritt des Materials der Tankwand aufweist. Die Haltegeometrie ist breiter ausgebildet als übrige Teile des Versteifungsprofils, so dass mehr Raum für Öffnungen und somit für formschlüssigen Halt des Versteifungsprofils im Bereich des Endes oder der Enden des Versteifungsprofils ausgebildet ist.

Ein Lösen des Versteifungsprofils, insbesondere an einem Ende des länglichen Versteifungsprofils, wird somit zuverlässig verhindert.

Die Bestimmung, dass sich "das Material der Tankwand" durch die Öffnungen der Haltegeometrie erstreckt ist dabei so zu verstehen, dass sich zumindest das Grundmaterial der Tankwand auch durch die Öffnungen erstreckt. Wenn beispielsweise das Material der Tankwand ein faserverstärkter High Density Polyethylen (HDPE) Kunststoff ist, so erstreckt sich durch die Öffnungen beispielsweise nur der HDPE Kunststoff, nicht notwendigerweise die Faserverstärkung.

Das Versteifungsprofil besteht bevorzugt aus faserverstärktem Kunststoff. Das Grundmaterial des Versteifungsprofils ist bevorzugt High Density Polyethylen (HDPE).

Das Material der Tankwand erstreckt sich bevorzugt so durch die Öffnungen der Haltegeometrie und auf die von der Tankwand abgewandte Hinterseite des Versteifungsprofils, dass dort eine stoffschlüssige Verbindung von zwei Schmelzefronten stattfindet. Das Material dringt also aufgrund der Öffnungen, insbesondere Langlöcher, von zwei Seiten ein und verschmilzt miteinander. Das Bauteil wird somit gänzlich "eingegossen".

Erfindungsgemäß umfassen die Öffnungen der Haltegeometrie mehrere nebeneinander und/oder untereinander angeordnete Langlöcher. Insbesondere zusätzlich zu den Langlöchern können beispielsweise auch runde Öffnungen vorgesehen sein.

Der Kunststofftank kann ein Kunststofftank für einen Lastkraftwagen sein, insbesondere ein Satteltank.

Bevorzugt sind auf die beschriebene Weise mindestens zwei oder mehrere Versteifungsprofile an der Tankwand des Kunststofftanks befestigt.

Das Versteifungsprofil oder die Versteifungsprofile können Streben oder Rippen an der Tankwand bilden.

Bevorzugt ist das Versteifungsprofil im Wesentlichen T-förmig, um ein hohes geometrisches Widerstandsmoment zu generieren.

Gemäß einer Ausführungsform der Erfindung ist die die von der Tankwand abgewandte Hinterseite des Versteifungsprofils mit einer Schicht des Materials der Tankwand versehen, insbesondere mit einer HDPE-Schicht, und reicht von der Tankwand her das Material der Tankwand durch die Öffnungen der Haltegeometrie, so dass das Material der Tankwand von beiden Seiten des Versteifungsprofils her im Herstellungsprozess des Kunststofftanks an den Öffnungen der Haltegeometrie miteinander verschweißt ist, so dass ein formschlüssiger Halt zwischen Tankwand und Versteifungsprofil an der Haltegeometrie im Bereich der Öffnungen besteht. Diese Lösung ist insbesondere dann vorteilhaft, wenn die Tankwand im Bereich der Haltegeometrie, beispielsweise durch Ausdünnung während dem Herstellungsprozess des Kunststofftanks, insbesondere durch Tiefziehen, sehr dünn ausgebildet ist. Im Fertigungsprozess des Kunststofftanks kann dann ein Materialschluss zwischen der Beschichtung, insbesondere der HDPE-Schicht, an der Haltegeometrie und dem Material, insbesondere dem HDPE, der Tankwand hergestellt werden.

Die Lösung der Aufgabe erfolgt auch durch ein Verfahren zur Herstellung eines Kunststofftanks wie zuvor beschrieben, wobei das Versteifungsprofil in ein Schalenwerkzeug eingelegt wird, wobei das Versteifungsprofil mittels Unterdruck im Schalenwerkzeug in Position gehalten wird, wobei das Material der Tankwand mittels Unterdruck an die Wände des Schalenwerkzeugs gesaugt wird um die Tankwand auszuformen, so dass beim Ausformen der Tankwand das Material der Tankwand in oder durch die Öffnungen gesaugt wird und dabei ein formschlüssiger Halt zwischen Tankwand und Versteifungsprofil entsteht.

Erfindungsgemäß wird ein Kunststofftank in einem Schalenwerkzeug mittels eines Vakuums, das das Plattenmaterial gegen die Werkzeugwand saugt, ausgeformt, insbesondere durch Tiefziehen mittels Vakuum. Das Vakuum zum Formen der Tankwand des Kunststofftanks wird gleichzeitig genutzt, um mindestens ein Versteifungsprofil im Schalenwerkzeug während des Herstellungsprozesses der Tankwand in Position zu halten. Das Kunststoff-Material der Tankwand wird durch das selbe Vakuum gegen die Schalen des Schalenwerkzeugs und somit auch gegen das Versteifungsprofil gesogen, so dass das Material der Tankwand hinter Bereiche des Versteifungsprofils, insbesondere hinter Hinterschneidungen und dergleichen, gelangen kann, so dass ein formschlüssiger Halt des Versteifungsprofils an der Tankwand des Kunststofftanks entsteht. Dabei entsteht kein stoffschlüssiger Halt des Versteifungsprofils an der Tankwand.

Durch ein solches Versteifungsprofil kann bei einem minimalen Volumenverlust eine hohe versteifende Wirkung erzielt werden. Die Herstellung des Kunststofftanks und dessen Versteifung ist dabei sehr einfach, kostengünstig und rasch.

Durch die Verwendung von Versteifungsprofilen mit Haltegeometrien, die Öffnungen aufweisen, kann beim Ausformen der Tankwand das Material der Tankwand in oder durch die Öffnungen gesaugt werden und dabei ein besonders sicherer formschlüssiger Halt zwischen Tankwand und Versteifungsprofil im Bereich der Haltegeometrien entstehen.

Bevorzugt wird das Versteifungsprofil so im Schalenwerkzeug in Position gehalten, dass ein breiteres Ende des Versteifungsprofils, insbesondere der waagrechte Strich einer T-Form, vom Schalenwerkzeug weiter absteht, als ein schmäleres Ende des Versteifungsprofils, insbesondere der senkrechte Strich einer T-Form.

Vorzugsweise besteht das Versteifungsprofil aus faserverstärktem Kunststoff. Das Versteifungsprofil kann auch aus Metall bestehen.

Gemäß einer Ausführungsform des Verfahrens kann beim Ausformen der Tankwand das Material der Tankwand durch die Öffnungen der Haltegeometrie gesaugt werden und sich auf die von der Tankwand abgewandte Hinterseite des Versteifungsprofils erstrecken, so dass dabei ein formschlüssiger Halt zwischen Tankwand und Versteifungsprofil im Bereich der Öffnungen der Haltegeometrie entsteht.

Gemäß einer Ausführungsform des Verfahrens kann die von der Tankwand abgewandte Hinterseite des Versteifungsprofils mit einer Schicht des Materials der Tankwand versehen werden, insbesondere mit einer HDPE-Schicht, und beim Ausformen der Tankwand das Material der Tankwand in die Öffnungen der Haltegeometrie gesaugt werden, so dass das Material der Tankwand von beiden Seiten des Versteifungsprofils her im Herstellungsprozess des Kunststofftanks im Bereich der Öffnungen der Haltegeometrie miteinander verschweißt, so dass dabei ein formschlüssiger Halt zwischen Tankwand und Versteifungsprofil im Bereich der Öffnungen der Haltegeometrie entsteht. Im Fertigungsprozess des Kunststofftanks kann somit ein Materialschluss zwischen der Beschichtung, insbesondere der HDPE-Schicht, an der Haltegeometrie und dem Material, insbesondere dem HDPE, der Tankwand hergestellt werden. Die Verbindung des Versteifungsprofils zur Tankwand kann durch Kaltverschweißung erreicht werden oder beispielsweise mittels einer Schweißflächenvorerwärmung durch eine Warmverschweißung erreicht werden.

Bevorzugt wird das Versteifungsprofil in eine passende Ausnehmung im Schalenwerkzeug eingelegt und in der Ausnehmung mittels Unterdruck in Position gehalten.

Das Versteifungsprofil kann, vor dem Einlegen in das Schalenwerkzeug, durch einen kontinuierlichen Prozess wie Extrudieren hergestellt werden oder durch einen diskontinuierlichen Prozess wie Spritzgießen hergestellt werden.

Vorzugsweise wird das Versteifungsprofil vor dem Einlegen in das Schalenwerkzeug in eine der späteren Tankwand angepasste Form gebogen.

Bevorzugt weist das Versteifungsprofil auch außerhalb der Haltegeomtrien mehrere Öffnungen auf, so dass beim Ausformen der Tankwand das Material der Tankwand durch die Öffnungen gesaugt wird und dabei ein formschlüssiger Halt zwischen Tankwand und Versteifungsprofil entsteht. Hierdurch kann die Festigkeit der Anbindung an den Kunststoffbehälter weiter erhöht werden.

Das Material der Tankwand erstreckt sich bevorzugt so durch die Öffnungen und auf die von der Tankwand abgewandte Hinterseite des Versteifungsprofils, dass dort eine stoffschlüssige Verbindung von zwei Schmelzefronten stattfindet. Das Material dringt also aufgrund der Öffnungen, insbesondere Langlöcher, von zwei Seiten ein und verschmilzt miteinander. Das Bauteil wird somit gänzlich "eingegossen".

Bevorzugt folgt nach dem Ausformen der Tankwand ein Abkühlprozess, wobei beim Abkühlprozess das Material der Tankwand so schrumpft, dass der formschlüssige Halt zwischen Tankwand und Versteifungsprofil verbessert wird und eine Vorspannung im Verstärkungselement erzeugt.

Vorzugsweise sind die Endbereiche des Versteifungsprofils auslaufend gestaltet um einen homogenen Spannungsverlauf zu gewährleisten.

### Kurzbeschreibung der Zeichnungen

Die Erfindung wird im Folgenden beispielhaft unter Bezugnahme auf die Zeichnungen beschrieben.
- Fig. 1: ist eine schematische Ansicht von außen auf einen Ausschnitt eines erfindungsgemäßen Kunststofftanks.
- Fig. 2: ist eine schematische Ansicht eines Versteifungsprofils von der der Tankwand zugewandten Seite her.
- Fig. 3: ist eine schematische Ansicht eines Versteifungsprofils gemäß Fig. 2 von der der Tankwand abgewandten Seite her.
- Fig. 4: ist eine schematische Ansicht auf einen Kunststofftank gemäß Fig. 1 von der Seite und zeigt die Position des Schnittes A-A.
- Fig. 5: ist eine Schnittansicht des Schnittes A-A gemäß Fig. 4.
- Fig. 6: ist eine Ansicht eines Versteifungsprofils von der der Tankwand zugewandten Seite her, entsprechend Fig. 2, jedoch mit dargestellter Haltegeometrie.

### Detaillierte Beschreibung der Erfindung

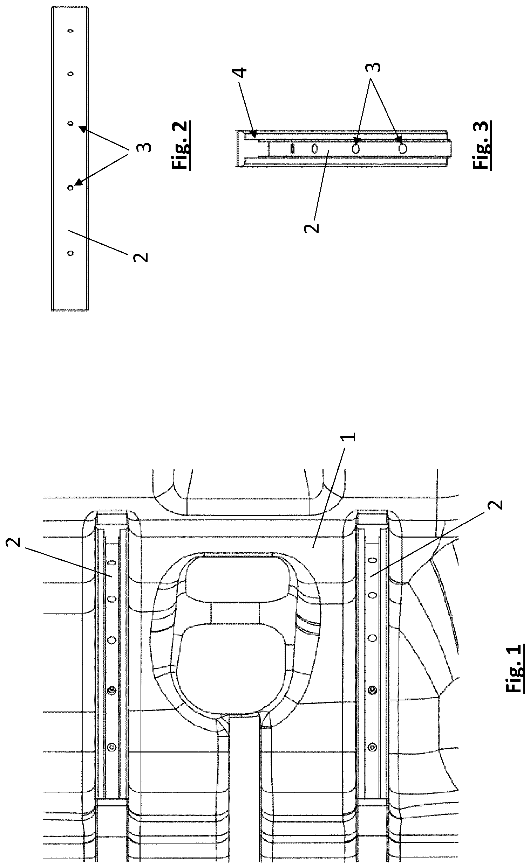

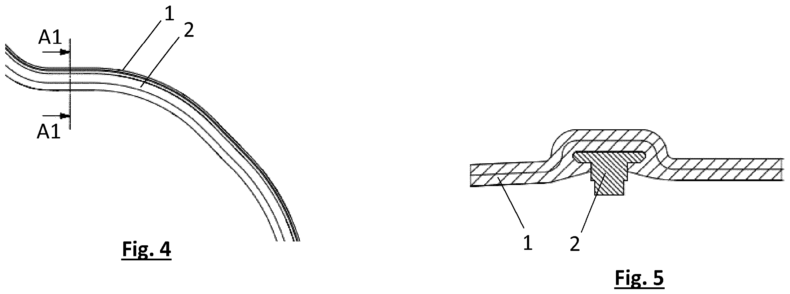

In Fig. 1-6 ist ein erfindungsgemäßer Kunststofftank ausschnittsweise dargestellt, der auf erfindungsgemäße Weise hergestellt worden ist.

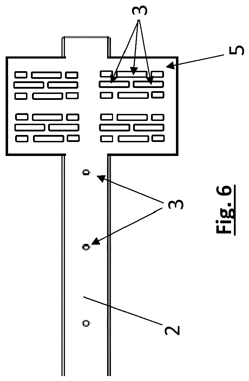

Dabei zeigen die Fig. 1 bis Fig. 5 das Versteifungsprofil nur schematisch, wobei die erfindungsgemäße Haltegeometrie 5, also Verbreiterung im Bereich eines Endes oder beiden Enden des Versteifungsprofils, nicht dargestellt ist. Die Haltegeometrie 5 ist in Fig. 6 in einer Draufsicht auf die Tankwand dargestellt.

Der Kunststofftank umfasst eine Tankwand 1 aus Kunststoff, beispielsweise aus HDPE, und mindestens ein, im dargestellten Ausschnitt aber bereits zwei Versteifungsprofile 2, zur Minimierung einer unerwünschten Verformung des Kunststofftanks.

Das Versteifungsprofil 2 wurde bei der Formung des Kunststofftanks in ein Schalenwerkzeug eingelegt, dann das Versteifungsprofil 2 mittels Unterdruck im Schalenwerkzeug in Position gehalten, sodann das Material der Tankwand 1 mittels Unterdruck an die Wände des Schalenwerkzeugs gesaugt um die Tankwand 1 auszuformen. Beim Ausformen der Tankwand 1 wurde dadurch das Material der Tankwand 1 um das Versteifungsprofil 2 gesaugt und dabei ein formschlüssiger Halt zwischen Tankwand 1 und Versteifungsprofil 2 hergestellt. Das Versteifungsprofil 2 weist einen T-förmigen Querschnitt auf und weist dadurch Hinterschneidungen auf, die vom Material der Tankwand 1 hintergriffen werden können. Ein stoffschlüssiger Halt zwischen Versteifungsprofil 2 und Tankwand 1 besteht nicht.

Die Montage erfolgt also durch das formschlüssige Umschließen des Tankschalenmaterials im Fügeprozess. Die Versteifungsprofile 2 werden in das offene Schalenwerkzeug in eine dafür vorgesehene Kavität eingelegt und durch anlegen von Vakuum in Position gehalten. Die Tankwand 1 wird in einem weiteren Schritt durch Anlegen von Unterdruck um das Profil der Versteifungsprofile 2 gesaugt. Es wird so bereits während des Formvorganges die Verbindung zwischen Rippenelementen, also Versteifungsprofilen 2, und Tankblase, also Tankwand 1, erreicht. Die Montage erfolgt formschlüssig, wie beispielsweise in Fig. 1, Fig. 3 und Fig. 5 an der Form des Versteifungsprofils 2 gut ersichtlich. Möglich ist auch die Durchdringung des eingelegten Versteifungsprofils 2 durch das schmelzflüssige Schalenmaterial, also Material der Tankwand 1. Hierzu können im Versteifungsprofil 2 Öffnungen 3 ausgebildet sein, wie in den Fig. 1 bis 3 dargestellt. Dies erzeugt durch zusätzliche Hinterschneidungen zusätzliche Festigkeit.

Eine zusätzliche Verpressung der Tankwand 1 zur Rippe bzw. dem Versteifungsprofil 2 kann durch den Schrumpf des Schalenmaterials von grob 3% im Abkühlprozess erreicht werden. Ein Schrumpf in Längsrichtung der Rippe 2 kann durch eine geeignete Aussparung oder Ausnehmung 4 zum Längenausgleich im Auslaufbereich der Rippen 2 vorgehalten werden.

Die Versteifungsprofile bestehen aus einem Werkstoff mit hoher Festigkeit und hoher Biegesteifigkeit. Hierfür kommen insbesondere faserverstärkte Kunststoffe sowie Metallbauteile in Frage.

Die Herstellung der Versteifungsprofile 2 kann wahlweise durch einen diskontinuierlichen Prozess wie Spritzguss oder einen kontinuierlichen Prozess wie Extrusion eines Profils ausgeführt werden.

Ein Versteifungsprofil 2 kann durch einen Umformprozess in Form gebogen werden.

Die geometrische Ausführung eines Versteifungsprofils 2 kann so ausgeführt werden, dass ein form- und kraftschlüssiger jedoch nicht stoffschlüssiger Verbund zwischen Tankwand 1 und Versteifungselement 2 eingegangen werden kann. Die Geometrie des Versteifungselements 2 ist der Tankgeometrie angepasst. Bevorzugte Geometrien sind Streben an der Tankschale.

Ein Versteifungsprofil 2 kann mehrere Öffnungen 3 aufweisen, so dass beim Ausformen der Tankwand 1 das Material der Tankwand 1 durch die Öffnungen 3 gesaugt wird und dabei ein verbesserter formschlüssiger Halt zwischen Tankwand 1 und Versteifungsprofil 2 entsteht.

Wie in Fig. 6 dargestellt, ist zumindest in der Nähe eines axialen Endes des Versteifungsprofils 2 eine Haltegeometrie 5 ausgebildet, wobei die Haltegeometrie 5 in einer - in Fig. 6 dargestellten - Draufsicht auf die Tankwand 1 des Kunststofftanks breiter ausgebildet ist, als andere axiale Abschnitte des Versteifungsprofils 2, insbesondere breiter als ein Mittelteil des Versteifungsprofils 2.

Die Haltegeometrie 5 weist Öffnungen 3 auf, so dass sich das Material der Tankwand 1 durch die Öffnungen 3 der Haltegeometrie 5 und auf die von der Tankwand abgewandte Hinterseite des Versteifungsprofils 2 erstrecken kann, so dass ein formschlüssiger Halt zwischen Tankwand 1 und Versteifungsprofil 2 an der Haltegeometrie 5 im Bereich der Öffnungen 3 besteht.

Die Öffnungen 3 der Haltegeometrie 5 umfassen mehrere Langlöcher, die nebeneinander und untereinander angeordnet sind, also in mehreren Zeilen und mehreren Spalten. Die Öffnungen 3 der Haltegeometrie sind links und rechts der Längsmittelachse des Versteifungsprofils 2 symmetrisch angeordnet.

Die von der Tankwand 1 abgewandte Hinterseite des Versteifungsprofils 2 kann mit einer Schicht des Materials der Tankwand 1 versehen sein, insbesondere mit einer HDPE-Schicht. Von der Tankwand 1 her, kann dann das Material der Tankwand 1 durch die Öffnungen 3 der Haltegeometrie 5 reichen, so dass das Material der Tankwand von beiden Seiten des Versteifungsprofils 2 her im Herstellungsprozess des Kunststofftanks an den Öffnungen 3 der Haltegeometrie 5 miteinander verschweißt wird, so dass ein formschlüssiger Halt zwischen Tankwand 1 und Versteifungsprofil 2 an der Haltegeometrie 5 im Bereich der Öffnungen 3 entsteht.

### Bezugszeichenliste

- 1: Tankwand
- 2: Versteifungsprofil
- 3: Öffnung
- 4: Ausnehmung
- 5: Haltegeometrie

## Patentansprüche

1. Kunststofftank, umfassend eine Tankwand (1) aus Kunststoff und mindestens ein längliches Versteifungsprofil (2) zur Minimierung einer unerwünschten Verformung des Kunststofftanks, wobei das Versteifungsprofil (2) an einer Außenseite des Kunststofftanks angeordnet ist, wobei das Material der Tankwand (1) zumindest bereichsweise das Versteifungsprofil (2) umgreift, so dass ein formschlüssiger Halt zwischen Tankwand (1) und Versteifungsprofil (2) besteht, wobei zumindest in der Nähe eines axialen Endes des Versteifungsprofils (2) eine Haltegeometrie (5) ausgebildet ist,
**dadurch gekennzeichnet, dass** die Haltegeometrie (5) in einer Draufsicht auf die Tankwand (1) des Kunststofftanks breiter ausgebildet ist, als andere axiale Abschnitte des Versteifungsprofils (2), wobei die Haltegeometrie (5) Öffnungen (3) aufweist, wobei sich das Material der Tankwand (1) durch die Öffnungen (3) der Haltegeometrie (5) und auf die von der Tankwand abgewandte Hinterseite des Versteifungsprofils (2) erstreckt, so dass ein formschlüssiger Halt zwischen Tankwand (1) und Versteifungsprofil (2) an der Haltegeometrie (5) im Bereich der Öffnungen (3) besteht, wobei die Öffnungen (3) der Haltegeometrie (5) mehrere nebeneinander und/oder untereinander angeordnete Langlöcher umfassen.

2. Kunststofftank nach Anspruch 1,
**dadurch gekennzeichnet, dass** das Versteifungsprofil (2) aus faserverstärktem Kunststoff besteht und/oder dass das Versteifungsprofil (2) im Wesentlichen aus HDPE besteht.

3. Kunststofftank nach zumindest einem der vorhergehenden Ansprüche,
**dadurch gekennzeichnet , dass** die die von der Tankwand (1) abgewandte Hinterseite des Versteifungsprofils (2) mit einer Schicht des Materials der Tankwand (1) versehen ist, insbesondere mit einer HDPE-Schicht, und von der Tankwand (1) her das Material der Tankwand (1) durch die Öffnungen (3) der Haltegeometrie (5) reicht, so dass das Material der Tankwand von beiden Seiten des Versteifungsprofils (2) her im Herstellungsprozess des Kunststofftanks an den Öffnungen (3) der Haltegeometrie (5) miteinander verschweißt ist, so dass ein formschlüssiger Halt zwischen Tankwand (1) und Versteifungsprofil (2) an der Haltegeometrie (5) im Bereich der Öffnungen (3) besteht.

4. Kunststofftank nach zumindest einem der vorhergehenden Ansprüche,
**dadurch gekennzeichnet , dass** am Versteifungsprofil (2) außerhalb der Haltegeometrie (5) zusätzliche Öffnungen (3), insbesondere als Langlöcher, ausgebildet sind, wobei sich das Material der Tankwand (1) durch die zusätzlichen Öffnungen (3) außerhalb der Haltegeometrie (5) und auf die von der Tankwand abgewandte Hinterseite des Versteifungsprofils (2) erstreckt, so dass ein formschlüssiger Halt zwischen Tankwand (1) und Versteifungsprofil (2) im Bereich der zusätzlichen Öffnungen (3) außerhalb der Haltegeometrie (5) besteht.

5. Kunststofftank nach Anspruch 4,
**dadurch gekennzeichnet , dass** sich das Material der Tankwand so durch die Öffnungen der Haltegeometrie und/oder durch die zusätzlichen Öffnungen und auf die von der Tankwand abgewandte Hinterseite des Versteifungsprofils erstreckt, dass dort eine stoffschlüssige Verbindung von zwei Schmelzefronten vorliegt.

6. Verfahren zur Herstellung eines Kunststofftanks nach einem der Ansprüche 1 bis 5, wobei das Versteifungsprofil (2) in ein Schalenwerkzeug eingelegt wird, wobei das Versteifungsprofil (2) mittels Unterdruck im Schalenwerkzeug in Position gehalten wird, wobei das Material der Tankwand (1) mittels Unterdruck an die Wände des Schalenwerkzeugs gesaugt wird um die Tankwand (1) auszuformen, so dass beim Ausformen der Tankwand (1) das Material der Tankwand (1) in oder durch die Öffnungen (3) gesaugt wird und dabei ein formschlüssiger Halt zwischen Tankwand (1) und Versteifungsprofil (2) entsteht.

7. Verfahren nach zumindest einem der vorhergehenden Ansprüche,
**dadurch gekennzeichnet, dass** beim Ausformen der Tankwand (1) das Material der Tankwand (1) durch die Öffnungen (3) der Haltegeometrie (5) gesaugt wird und sich auf die von der Tankwand abgewandte Hinterseite des Versteifungsprofils (2) erstreckt, so dass dabei ein formschlüssiger Halt zwischen Tankwand (1) und Versteifungsprofil (2) im Bereich der Öffnungen (3) der Haltegeometrie (5) entsteht.

8. Verfahren nach zumindest einem der vorhergehenden Ansprüche,
**dadurch gekennzeichnet, dass** die von der Tankwand (1) abgewandte Hinterseite des Versteifungsprofils (2) mit einer Schicht des Materials der Tankwand (1) versehen wird, insbesondere mit einer HDPE-Schicht, und beim Ausformen der Tankwand (1) das Material der Tankwand (1) in die Öffnungen (3) der Haltegeometrie (5) gesaugt wird, so dass das Material der Tankwand (1) von beiden Seiten des Versteifungsprofils (2) her im Herstellungsprozess des Kunststofftanks im Bereich der Öffnungen (3) der Haltegeometrie (5) miteinander verschweißt, so dass dabei ein formschlüssiger Halt zwischen Tankwand (1) und Versteifungsprofil (2) im Bereich der Öffnungen (3) der Haltegeometrie (5) entsteht.

9. Verfahren nach zumindest einem der vorhergehenden Ansprüche,
**dadurch gekennzeichnet, dass** das Versteifungsprofil (2) in eine passende Ausnehmung im Schalenwerkzeug eingelegt wird und in der Ausnehmung mittels Unterdruck in Position gehalten wird.

10. Verfahren nach zumindest einem der vorhergehenden Ansprüche,
**dadurch gekennzeichnet, dass** das Versteifungsprofil (2) vor dem Einlegen in das Schalenwerkzeug durch einen kontinuierlichen Prozess wie Extrudieren hergestellt wird oder durch einen diskontinuierlichen Prozess wie Spritzgießen hergestellt wird.

11. Verfahren nach zumindest einem der vorhergehenden Ansprüche,
**dadurch gekennzeichnet, dass** das Versteifungsprofil (2) vor dem Einlegen in das Schalenwerkzeug in eine der späteren Tankwand (1) angepasste Form gebogen wird.

12. Verfahren nach zumindest einem der vorhergehenden Ansprüche,
**dadurch gekennzeichnet, dass** nach dem Ausformen der Tankwand (1) ein Abkühlprozess folgt, wobei beim Abkühlprozess das Material der Tankwand (1) so schrumpft, dass der formschlüssige Halt zwischen Tankwand (1) und Versteifungsprofil (2) verbessert wird.

## Claims

1. Plastic tank comprising a tank wall (1) made of plastic and at least one elongate reinforcing profile (2) for minimizing unwanted deformation of the plastic tank, wherein the reinforcing profile (2) is arranged on an outer side of the plastic tank, wherein the material of the tank wall (1) engages around the reinforcing profile (2), at least in some region or regions, with the result that there is positive retention between the tank wall (1) and the reinforcing profile (2), wherein a retaining geometry (5) is formed at least in the vicinity of one axial end of the reinforcing profile (2), **characterized in that** the retaining geometry (5) is of wider design, in a plan view of the tank wall (1) of the plastic tank, than other axial portions of the reinforcing profile (2), wherein the retaining geometry (5) has openings (3), wherein the material of the tank wall (1) extends through the openings (3) of the retaining geometry (5) and onto the rear side of the reinforcing profile (2) facing away from the tank wall, with the result that there is positive retention between the tank wall (1) and the reinforcing profile (2) at the retaining geometry (5) in the region of the openings (3) wherein the openings (3) of the retaining geometry (5) comprise a plurality of slotted holes, arranged adjacent to one another and/or among one another.

2. Plastic tank according to Claim 1,
**characterized in that** the reinforcing profile (2) is composed of fibre-reinforced plastic and/or **in that** the reinforcing profile (2) is composed substantially of HDPE.

3. Plastic tank according to at least one of the preceding claims,
**characterized in that** the rear side of the reinforcing profile (2) facing away from the tank wall (1) is provided with a layer of the material of the tank wall (1), in particular with an HDPE layer, and the material of the tank wall (1) reaches from the tank wall (1) through the openings (3) of the retaining geometry (5), with the result that the material of the tank wall is welded together from both sides of the reinforcing profile (2) at the openings (3) of the retaining geometry (5) during the process of producing the plastic tank, with the result that there is positive retention between the tank wall (1) and the reinforcing profile (2) at the retaining geometry (5) in the region of the openings (3).

4. Plastic tank according to at least one of the preceding claims,
**characterized in that** additional openings (3), in particular slotted holes, are formed in the reinforcing profile (2) outside the retaining geometry (5), wherein the material of the tank wall (1) extends through the additional openings (3) outside the retaining geometry (5) and onto the rear side of the reinforcing profile (2) facing away from the tank wall, with the result that there is positive retention between the tank wall (1) and the reinforcing profile (2) in the region of the additional openings (3) outside the retaining geometry (5).

5. Plastic tank according to Claim 4,
**characterized in that** the material of the tank wall extends in such a way through the openings of the retaining geometry and/or through the additional openings and onto the rear side of the reinforcing profile facing away from the tank wall that there is a materially bonded connection between two melting fronts there.

6. Method for producing a plastic tank according to any of Claims 1 to 5, wherein the reinforcing profile (2) is placed in a shell mould, wherein the reinforcing profile (2) is held in position in the shell mould by means of a vacuum, wherein the material of the tank wall (1) is sucked against the walls of the shell mould by means of a vacuum in order to form the tank wall (1), with the result that, during the forming of the tank wall (1), the material of the tank wall (1) is sucked into or through the openings (3) and, in the process, gives rise to positive retention between the tank wall (1) and the reinforcing profile (2).

7. Method according to at least one of the preceding claims,
**characterized in that**, during the forming of the tank wall (1), the material of the tank wall (1) is sucked through the openings (3) of the retaining geometry (5) and extends onto the rear side of the reinforcing profile (2) facing away from the tank wall, with the result that, in the process, positive retention arises between the tank wall (1) and the reinforcing profile (2) in the region of the openings (3) of the retaining geometry (5).

8. Method according to at least one of the preceding claims,
**characterized in that** the rear side of the reinforcing profile (2) facing away from the tank wall (1) is provided with a layer of the material of the tank wall (1), in particular with an HDPE layer, and, during the forming of the tank wall (1), the material of the tank wall (1) is sucked into the openings (3) of the retaining geometry (5), with the result that the material of the tank wall (1) is welded together from both sides of the reinforcing profile (2) in the region of the openings (3) of the retaining geometry (5) during the process of producing the plastic tank, with the result that, in the process, positive retention arises between the tank wall (1) and the reinforcing profile (2) in the region of the openings (3) of the retaining geometry (5).

9. Method according to at least one of the preceding claims,
**characterized in that** the reinforcing profile (2) is inserted into a matching recess in the shell mould and held in position in the recess by means of a vacuum.

10. Method according to at least one of the preceding claims,
**characterized in that**, before being placed in the shell mould, the reinforcing profile (2) is produced by a continuous process, such as extrusion, or by a discontinuous process, such as injection moulding.

11. Method according to at least one of the preceding claims,
**characterized in that**, before being placed in the shell mould, the reinforcing profile (2) is bent into a shape matching the subsequent tank wall (1).

12. Method according to at least one of the preceding claims,
**characterized in that** the forming of the tank wall (1) is followed by a cooling process, wherein the material of the tank wall (1) shrinks in such a way during the cooling process that the positive retention between the tank wall (1) and the reinforcing profile (2) is improved.

## Revendications

1. Réservoir en matière plastique, comprenant une paroi de réservoir (1) en matière plastique et au moins un profilé raidisseur oblong (2) pour la minimisation d'une déformation indésirable du réservoir en matière plastique, le profilé raidisseur (2) étant agencé sur un côté extérieur du réservoir en matière plastique, le matériau de la paroi de réservoir (1) entourant au moins en zones le profilé raidisseur (2), de telle sorte qu'il existe un maintien par accouplement de forme entre la paroi de réservoir (1) et le profilé raidisseur (2), une géométrie de maintien (5) étant formée au moins à proximité d'une extrémité axiale du profilé raidisseur (2),
**caractérisé en ce que** la géométrie de maintien (5) est configurée, en vue de dessus sur la paroi de réservoir (1) du réservoir en matière plastique, sous forme plus large que les autres sections axiales du profilé raidisseur (2), la géométrie de maintien (5) comprenant des ouvertures (3), le matériau de la paroi de réservoir (1) s'étendant à travers les ouvertures (3) de la géométrie de maintien (5) et sur le côté arrière du profilé raidisseur (2) détourné de la paroi de réservoir, de telle sorte qu'il existe un maintien par accouplement de forme entre la paroi de réservoir (1) et le profilé raidisseur (2) au niveau de la géométrie de maintien (5) dans la zone des ouvertures (3), les ouvertures (3) de la géométrie de maintien (5) comprenant plusieurs trous allongés agencés les uns à côté des autres et/ou les uns en dessous des autres.

2. Réservoir en matière plastique selon la revendication 1,
**caractérisé en ce que** le profilé raidisseur (2) est constitué de matière plastique renforcée par des fibres et/ou **en ce que** le profilé raidisseur (2) est essentiellement constitué d'HDPE.

3. Réservoir en matière plastique selon au moins l'une quelconque des revendications précédentes,
**caractérisé en ce que** le côté arrière du profilé raidisseur (2) détourné de la paroi de réservoir (1) est muni d'une couche du matériau de la paroi de réservoir (1), notamment d'une couche d'HDPE, et le matériau de la paroi de réservoir (1) s'étend depuis la paroi de réservoir (1) à travers les ouvertures (3) de la géométrie de maintien (5), de telle sorte que le matériau de la paroi de réservoir des deux côtés du profilé raidisseur (2) est soudé l'un avec l'autre dans le processus de fabrication du réservoir en matière plastique au niveau des ouvertures (3) de la géométrie de maintien (5), de telle sorte qu'il existe un maintien par accouplement de forme entre la paroi de réservoir (1) et le profilé raidisseur (2) au niveau de la géométrie de maintien (5) dans la zone des ouvertures (3).

4. Réservoir en matière plastique selon au moins l'une quelconque des revendications précédentes,
**caractérisé en ce que** des ouvertures supplémentaires (3), notamment sous la forme de trous allongés, sont formées au niveau du profilé raidisseur (2) à l'extérieur de la géométrie de maintien (5), le matériau de la paroi de réservoir (1) s'étendant à travers les ouvertures supplémentaires (3) à l'extérieur de la géométrie de maintien (5) et sur le côté arrière du profilé raidisseur (2) détourné de la paroi de réservoir, de telle sorte qu'il existe un maintien par accouplement de forme entre la paroi de réservoir (1) et le profilé raidisseur (2) dans la zone des ouvertures supplémentaires (3) à l'extérieur de la géométrie de maintien (5).

5. Réservoir en matière plastique selon la revendication 4,
**caractérisé en ce que** le matériau de la paroi de réservoir s'étend à travers les ouvertures de la géométrie de maintien et/ou à travers les ouvertures supplémentaires et sur le côté arrière du profilé raidisseur détourné de la paroi de réservoir, de telle sorte qu'une liaison par accouplement de matière de deux fronts de masse fondue y soit présente.

6. Procédé de fabrication d'un réservoir en matière plastique selon l'une quelconque des revendications 1 à 5, le profilé raidisseur (2) étant placé dans un outil à coques, le profilé raidisseur (2) étant maintenu en position dans l'outil à coques au moyen d'une sous-pression, le matériau de la paroi de réservoir (1) étant aspiré au moyen d'une sous-pression sur les parois de l'outil à coques afin de former la paroi de réservoir (1), de telle sorte que, lors de la formation de la paroi de réservoir (1), le matériau de la paroi de réservoir (1) est aspiré dans ou à travers les ouvertures (3) et un maintien par accouplement de forme est ainsi produit entre la paroi de réservoir (1) et le profilé raidisseur (2).

7. Procédé selon au moins l'une quelconque des revendications précédentes, **caractérisé en ce que**, lors de la formation de la paroi de réservoir (1), le matériau de la paroi de réservoir (1) est aspiré à travers les ouvertures (3) de la géométrie de maintien (5) et s'étend sur le côté arrière du profilé raidisseur (2) détourné de la paroi de réservoir, de telle sorte qu'un maintien par accouplement de forme est produit entre la paroi de réservoir (1) et le profilé raidisseur (2) dans la zone des ouvertures (3) de la géométrie de maintien (5).

8. Procédé selon au moins l'une quelconque des revendications précédentes, **caractérisé en ce que** le côté arrière du profilé raidisseur (2) détourné de la paroi de réservoir (1) est muni d'une couche du matériau de la paroi de réservoir (1), notamment d'une couche d'HDPE, et, lors de la formation de la paroi de réservoir (1), le matériau de la paroi de réservoir (1) est aspiré dans les ouvertures (3) de la géométrie de maintien (5), de telle sorte que le matériau de la paroi de réservoir (1) des deux côtés du profilé raidisseur (2) est soudé l'un avec l'autre dans le processus de fabrication du réservoir en matière plastique dans la zone des ouvertures (3) de la géométrie de maintien (5), de telle sorte qu'un maintien par accouplement de forme est produit entre la paroi de réservoir (1) et le profilé raidisseur (2) dans la zone des ouvertures (3) de la géométrie de maintien (5).

9. Procédé selon au moins l'une quelconque des revendications précédentes, **caractérisé en ce que** le profilé raidisseur (2) est placé dans un évidement adapté dans l'outil à coques et est maintenu en position dans l'évidement au moyen d'une sous-pression.

10. Procédé selon au moins l'une quelconque des revendications précédentes, **caractérisé en ce qu'**avant la mise en place dans l'outil à coques, le profilé raidisseur (2) est fabriqué par un processus continu tel qu'une extrusion ou est fabriqué par un processus discontinu tel qu'un moulage par injection.

11. Procédé selon au moins l'une quelconque des revendications précédentes, **caractérisé en ce qu'**avant la mise en place dans l'outil à coques, le profilé raidisseur (2) est courbé en une forme adaptée à la paroi de réservoir ultérieure (1).

12. Procédé selon au moins l'une quelconque des revendications précédentes, **caractérisé en ce qu'**après la formation de la paroi de réservoir (1), un processus de refroidissement a lieu ; lors du processus de refroidissement, le matériau de la paroi de réservoir (1) rétrécissant de telle sorte que le maintien par accouplement de forme entre la paroi de réservoir (1) et le profilé raidisseur (2) est amélioré.
